# EUROPEAN PATENT SPECIFICATION

(11) **EP 2 813 844 B1**
(45) Date of publication and mention of the grant of the patent: **08.02.2017**
(21) Application number: 13171935.3
(22) Date of filing: 13.06.2013
(51) Int. Cl.: G01N 27/404

(54) **Oxygen galvanic sensor based on noble metals**
Galvanischer Sauerstoffsensor auf Basis von Edelmetallen
Capteur galvanique d'oxygène à base de métaux nobles

(43) Date of publication of application: 17.12.2014
(73) Proprietor: Honeywell International Inc., Morris Plains, NJ 07950 (US)
(72) Inventor: Cobianu, Cornel P., 051434 Bucharest (RO); Serban, Bogdan Catalin, 60000 Bucharest (RO); Avramescu, Viorel, 030342 Bucharest (RO); Hobbs, Bryan, West Sussex, BN18 0AS (GB); Pratt, Keith Frances Edwin, Hampshire P06 1PT (GB); Willett, Martin, Hampshire P08 0XT (GB)
(74) Representative: Houghton, Mark Phillip

(56) References cited:
- WO-A1-2013/039414
- WO-A1-2013/049752
- GB-A- 2 178 540
- CORNEL COBIANU ET AL: "Lead-free galvanic oxygen sensors A conceptual approach", SEMICONDUCTOR CONFERENCE (CAS), 15 October 2012 (2012-10-15), pages 161-164, XP032296369, IEEE DOI: 10.1109/SMICND.2012.6400667 ISBN: 978-1-4673-0737-6
- Various: "SERIES ON SCIENCE AND TECHNOLOGY OF INFORMATION INFORMATION THEORY AND COMPLEXITY PHOTONICS AND OPTICAL ENGINEERING ELECTRONICS AND TELECOMMUNICATIONS", ACADEMY OF ROMANIAN SCIENTISTS ANNALS , vol. 5, no. 2 2012, pages FP-74, XP055085525, Retrieved from the Internet: URL:http://www.aos.ro/site_mod/Publicatii/ 2012/AnaleINFOnr2pe2012.pdf [retrieved on 2013-10-28]
- DATABASE WPI Week 198501 Thomson Scientific, London, GB; AN 1985-003979 XP002715571, & JP S59 204754 A (KOMYO RIKAGAKU KOGY) 20 November 1984 (1984-11-20)

## Description

### BACKGROUND

Galvanic oxygen sensors are widely applied in high volumes in industrial, environmental and medical measurements. Galvanic sensors can have high reliability and a good response time. However, some known sensors require the use of dangerous compounds that are potentially harmful to the manufacturer, the user, and the environment.

### SUMMARY

The present disclosure is directed toward a long-life, lead-free, gas (e.g., oxygen) galvanic sensor and method for making the galvanic sensors. The galvanic sensors of the present disclosure can provide a lead-free sensor that has an increased lifetime, while maintaining the response time and sensing accuracy of previous galvanic sensors.

WO2013/039414 discloses a lead-free, self-corrosion-free electrochemical galvanic oxygen sensor comprising a lead-free anode, an alkali electrolyte, a carbon platinised with platinum cathode and a nickel wire current collector.

WO2013/049752 discloses a lead-free oxygen sensor having a carbon fiber coated with gold cathode, a bismuth anode formed from melting or pressing bismuth granules, and a potassium hydroxide or acetic acid electrolyte

### DETAILED DESCRIPTION OF THE DRAWINGS

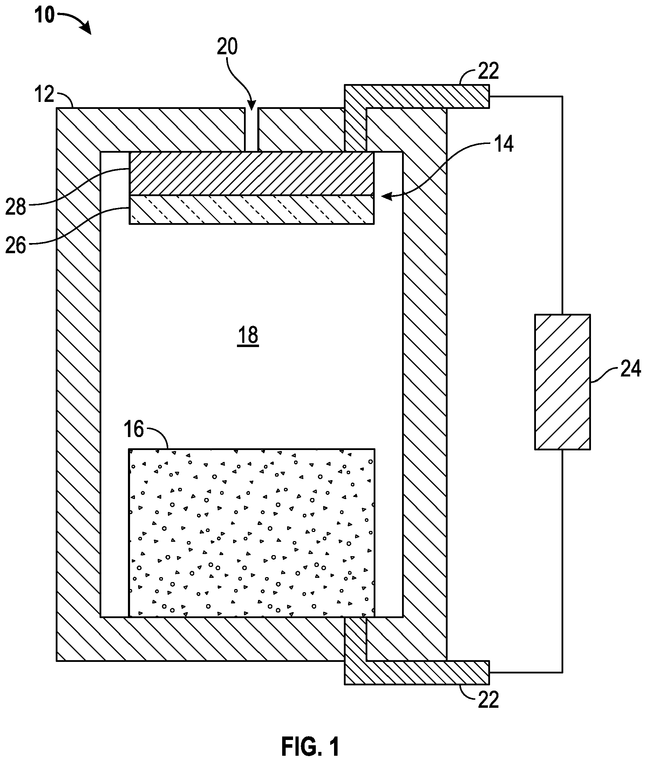

The embodiments of the present disclosure will be described, by way of example only, by reference to the FIG. 1 of the accompanying drawing in which:
FIG. 1 shows a cross-sectional view of a galvanic gas sensor, in accordance with at least one example of the present disclosure.

### DETAILED DESCRIPTION

As discussed herein, the present disclosure is directed to long-life, lead-free, gas (e.g., oxygen) galvanic sensors and methods for making the galvanic sensors. The galvanic sensors of the present disclosure can provide a lead-free sensor that has an increased lifetime, while maintaining the response time and sensing accuracy of previous galvanic sensors.

In previous approaches, lead had been used as the anode material because of the reliability, stability, and ease of manufacture of lead. However, lead is known to be a toxic material that, even in relatively low chronic doses, can be harmful to humans. Regulations regarding limits for lead and lead containing substances in the environment have been repeatedly lowered, even prohibited in some areas.

The galvanic sensors of the present disclosure can provide a replacement for the lead anode, while increasing the lifetime of the galvanic sensors and maintaining the response time and sensing accuracy. The galvanic sensors of the present disclose can provide a lifetime of, for example, five years. The anode disclosed in the present disclosure is substantially free from lead and can be used as a drop-in replacement for existing portable gas detection instruments, which is advantageous since other components of currently existing sensors do not have to be altered to be converted to a lead-free sensor.

The galvanic sensor of the present disclosure can minimize anode passivation and thus can extend the lifespan of the sensor over previous galvanic sensors. The galvanic sensor of the present disclosure can control the competition between the rate of passivation production and its removal, where the removal rate of the passivation layer is greater than the rate of the passivation layer formation during the operation of the galvanic sensor. This can be obtained in part by sensor current in the limiting current region and by increasing the surface area of the anode. The galvanic sensor of the present disclosure provides for the reduced rate of passivation layer formation due to passivation distribution on the increased surface area. Additionally, the galvanic sensors of the present disclosure include an electrolyte that ensures that the etching rate of the passivation layer is greater than the rate of the passivation layer formation. The galvanic sensor of the present disclosure can increase the lifespan (e.g., greater than four years) of sensors that are lead-free.

FIG. 1 shows a cross-sectional view of a galvanic sensor (also referred to as "sensor"), in accordance with at least one example of the present disclosure. The sensor 10 can include a housing 12. The housing 12 can include an anode 16, a cathode 14, and an electrolyte 18. The cathode 14 and anode 16 can be coupled to an external load resistor 24 (e.g., 100 ohms) via a set of wire collectors 22 (e.g., nickel wire connectors). In addition, while the current collector 22 of FIG. 1 shows a very specific structure, the current collector 22 is contemplated to include any structure whereby electrical connection is made from an external circuit to the electrode(s) including, but not limited to, a metal wire feeding from the exterior of the sensor housing to said electrode or an extension of the electrode itself to the exterior of the sensor housing.

The sensor 10 may be provided with a diffusion control device associated with the housing 12 (e.g., a lid of the housing 12). The diffusion control device may be a capillary 20 extending through the housing 12 with a predetermined diameter and length and a diffusion membrane 28 attached to a electrocatalyst layer 26. The diffusion membrane 28 can have a predetermined permeability which limits air admission to electrocatalyst layer 26, and/or a solid diffusion barrier in which oxygen is soluble and mobile. As discussed herein, the galvanic sensor 10 of the present disclosure can provide a lead-free, drop-in replacement for current portable sensors that can have a lifetime of greater than four years, for example, five years.

### Anode Construction

The anode 16 of the present disclosure can be selected such that the risk of corrosion with hydrogen generation is minimized. In an example, the anode 16 is substantially free from lead and is selected from the group consisting of antimony (Sb), bismuth (Bi), copper (Cu), and combinations thereof. The term "substantially free" as used herein refers to a less than, as in no more than about 1.0 wt.%, 0.9 wt. %, 0.8%, 0.7%, 0.6%, 0.5%, 0.4%, 0.2%, 0.1%, 0.01%, 0.001%, or about 0.0001% or less.

In an example, the anode 16 can include substantially pure antimony. The term "substantially pure" as used herein refers to a majority of, or mostly, as in at least about 50%, 60%, 70%, 80%, 90%, 95%, 96%, 97%, 98%, 99%, 99.5%, 99.9%, 99.99%, or at least about 99.999% or more. In an example, the anode 16 can be made from an antimony-bismuth alloy. The antimony-bismuth alloy used to form the anode 16 can include antimony within a range of from about 90 weight percent (wt. %) to about 99 wt. %, for example about 90 wt. %, about 91 wt. %, about 92 wt. %, about 93 wt. %, about 94 wt. %, about 95 wt. %, about 96 wt. %, about 97 wt. %, about 98 wt. % and, about 99 wt. %. The antimony-bismuth alloy used to form the anode 16 can include bismuth within a range of from about 1 wt. % to about 10 wt. %, for example about 1 wt. %, about 2 wt. %, about 3 wt. %, about 4 wt. %, about 5 wt. %, about 6 wt. %, about 7 wt. % about 8 wt. %, about 9 wt. %and, about 10 wt. %. In an example, the anode 16 can be made from substantially pure bismuth. In another example, the anode 16 can be made from substantially pure copper.

Increasing the lifetime of the sensor 10 can further be achieved by increasing the surface area of the anode 16, which is consumable during use. For example, the surface area of the anode 16 can be greater than 10 centimeters squared (cm²). In an example, the surface area of the anode 16 can be within a range of from 10 cm² to about 60 cm², for example, from about 15 cm² to about 55 cm², such as about 25 cm², about 35 cm², about 45 cm², and about 50 cm². However, antimony, bismuth, and antimony-bismuth alloys can be brittle materials and cannot be formed into a wire or mesh like other materials, for example, tin or copper. However, the surface area of the anode 16 formed from antimony, bismuth, or the antimony-bismuth alloy can be achieved by the methods described herein.

In an example, the anode 16 can be formed from a plurality of particles. In one example, the anode 16 can be formed from a plurality of particles when the anode 16 is antimony, bismuth, or the antimony-bismuth alloy. However, the anode 16 can also be formed with a plurality of copper particles. The plurality of particles can include particles of substantially pure antimony (e.g., antimony), particles of substantially pure bismuth, particles of substantially pure copper, particles of the antimony-bismuth alloy, and combinations thereof. The plurality of particles can have a diameter of less than about 2 millimeters (mm). For example, the plurality of particles can have a diameter within a range of from 0.1 mm to about 2 mm. In an example, the diameter of the plurality of particles can be less than about 1 mm. The plurality of particles has an average diameter of less than about 2 mm, for example, about 2 mm, about 1.9 mm, about 1.8 mm, about 1.7 mm, about 1.6 mm, about 1.5 mm, about 1.4 mm, about 1.3 mm, about 1.2 mm, about 1.1 mm, about 1.0 mm, about 0.9 mm, about 0.8 mm, about 0.7 mm, about 0.7 mm, , about 0.6 mm, about 0.5 mm, about 0.4 mm, about 0.3 mm, about 0.2 mm, and about 0.1 mm.

In an example, the anode 16 utilized in the sensor 10 can be formed by sintering the plurality of particles at a temperature below the melting point of the material of the plurality of particles. In an example, the sintering can be done in a non-oxidizing inert ambient, with respect to the material of particles (e.g., antimony and/or antimony-bismuth alloy). For example, when the plurality of particles are antimony, the temperature can be less than 630 degrees Celsius (°C). For example, the temperature can be within a range of from about 350 °C to about 600 °C. When the plurality of particles are antimony, the inert ambient can be, for example, argon. When the plurality of particles are the antimony-bismuth alloy, the temperature can be below 271 °C and the inert ambient can be, for example, argon. Other non-oxidizing inert ambients are possible.

Sintering the plurality of particles can create some deformation and interdiffusion of the particles around the points of contact between the plurality of particles. The sintering can be performed to impart sufficient strength to the anode 16 structure, without materially altering the particle size (e.g., diameter), thereby essentially preserving the surface area of the anode 16. In an example, after sintering, the plurality of particles may include a variety of shapes that are not substantially circular particles. However, the sintered particles can have a long dimension that is equal to or less than about 3 mm. In an example, the long dimension of the sintered particles can be equal to or less than about 2.8 mm, for example, about 2.7 mm, about 2.6, about 2.5 mm, about 2.4 mm, about 2.3 mm, about 2.2 mm, 2.1 mm, about 2.0 mm, about 1.9 mm, less than about 1.8 mm, about 1.7 mm, about 1.6 mm, about 1.5 mm, about 1.4 mm, about 1.3 mm, about 1.2 mm, about 1.1 mm, about 0.9 mm, about 0.8 mm, about 0.7 mm, about 0.6 mm, about 0.5 mm, about 0.4 mm, about 0.3 mm, about 0.2 mm, and about 0.1 mm.

### Cathode Construction

The cathode 14 of the present disclosure can be a gas diffusion electrode and can include platinum, silver, gold, and combinations thereof. In an example, the cathode 14 can include an electrocatalyst layer 26 and a membrane 28. In one example, the electrocatalyst layer 26 can include a platinum component and a polytetrafluoroethylene (PTFE) component. The platinum component can include platinum within a range of from about 1 wt. % to about 100 wt. %. While FIG. 1 is discussed with reference to a platinum component, it is understood that the cathode 14 can include silver or gold. In that instance, the electrocatalyst layer 26 includes either a silver component or a gold component instead of the platinum component.

In an example where the electrocatalyst layer 26 includes platinum, the platinum component can include, platinum particles, platinized carbon powder, or a mixture of platinum and carbon. In an example, the platinum component can include platinum within a range of from about 1.0 wt. % to about 99 wt. % and carbon within a range of from about 99 wt. % to about 1 wt. % carbon, based on the total weight of the platinum component. In an example, the platinum component can include platinum within a range of from about 1.0 wt. % to about 5.0 wt. % and carbon within a range of from about 99 wt. % to about 95 wt. %, based on the total weight of the platinum component. For example, the platinum component can include platinum within a range of from about 1.0 wt. % to about 5.0 wt. %, for example, about 1.5 wt. %, about 2.0 wt. %, about 2.5 wt. %, about 3.0 wt. %, about 3.5 wt. %, about 4.0 wt. %, and about 4.5 wt. %.

In an example, the PTFE component of the electrocatalyst layer 26 can include particles of PTFE. In such an example, the platinum component (e.g., platinum is mixed with carbon, where platinum weight percent in carbon is from 1wt. % to 10. wt%) and the platinum component can be mixed with the PTFE component (e.g., PTFE particles), where the PTFE weight percent is about 50% based on the total weight of the electrocatalyst layer 26 (e.g., the platinum component and the PTFE component). Thus, the electrocatalyst layer 26 can include particulate PTFE within a range of from about 40 to 60 wt.%, for example, about 45 wt.% , about 50 wt.%, and about 55 wt.%, based on a total weight of the PTFE component and the platinum component.

In an example, the platinum and carbon can aggregate together with the PTFE particles to form the electrocatalyst layer 26. During sensor 10 operation, a "three-phase interface" can form at the cathode 14, where gas (e.g., oxygen), liquid (the electrolyte 18), and solid electrocatalyst layer 26 can coexist. At this three-phase interface the electrochemical process of cathodic oxygen reduction can occur by means of electrons supplied by the anode 16, via the external circuit.

In an example, the electrocatalyst layer 26 can includes 100 wt. % platinum. In that instance, the electrocatalyst layer 26 will not include carbon in the platinum component or the PTFE component. That is, the platinum component is formed of substantially pure platinum particles. In another example, the platinum component containing pure platinum particles can be mixed with the PTFE component (e.g., PTFE particles) to form the electrocatalyst layer 26. For example, when the electrocatalyst layer 26 does not include carbon, electrocatalyst layer 26 includes the platinum component formed of platinum powder and the PTFE component formed of PTFE particles. As discussed herein, the electrocatalyst layer 26 can also be formed with silver and or gold instead of platinum and can be a wire mesh or in particulate form.

In an example, the electrocatalyst layer 26 can be bonded to the membrane 28 to form the cathode 14 (e.g., a gas diffusion electrode). The membrane 28 can be a micro-porous, PTFE membrane. The membrane 28 can be positioned on a superior side of the electrocatalyst layer 26. An inferior surface of the electrocatalyst layer 26 can contact the electrolyte 18. The membrane 28 can act as a mechanical support for the electrocatalyst layer 26 and facilitate oxygen diffusion to the reaction sites, while preventing the electrolyte (e.g., an aqueous solution) from leaking out of the cell. In other example, the membrane 28 can be a solid PTFE diffusion barrier.

### Capillary

As discussed herein, the sensor 10 may be provided with a diffusion control device. In one example, the diffusion control device of the sensor 10 can be a capillary 20. In another example, the diffusion control device of the sensor 10 can be a diffusion membrane (e.g., the solid PTFE diffusion barrier) of a predetermined permeability.

In one example, the diffusion control device can include the capillary 20 extending through the housing 12 (e.g., extending through a sensor lid). The design of the capillary 20 (e.g., length and diameter) can affect the sensors 10 current and sensors 10 quality. In an example, the diameter of the capillary 20 can be within a range of from 10 micrometers (µm) to about 100 µm, for example, from about 10 µm to about 40 µm. In one example, the diameter of the capillary 20 can be constant. In another example, the diameter of the capillary 20 can vary. For example, an upper diameter can be about 50 µm and a lower diameter can be about 40 µm. In another example, the upper diameter can be about 40 µm and the lower diameter can be about 50 µm. The length of the capillary 20 can be within a range of from about 1.5 mm to about 3 mm, for example, about 2.0 mm to about 2.5 mm, such as about 2.1 mm, about 2.2 mm, about 2.3 mm, and about 2.4 mm. In one example, the diameter is 50 µm and the length is 3 mm.

### Electrolyte

As discussed herein, the electrolyte 18 used in the galvanic sensor 10 can ensure that the etching rate of the passivation layer is greater than the rate of the passivation layer formation, based on well known attack of OH⁻ or F⁻ anions to the metal oxides with formation of soluble species in the electrolyte during anode metal oxidation process.

In an example, the electrolyte 18 can be an aqueous solution of 0.5 M-4.0 M phosphoric acid and of 0.001 M - 2 M potassium fluoride. The electrolyte can have a pH within a range of about 1.3 to about 2.5.

In an example, the electrolyte 18 can be an aqueous solution of 4.0 M potassium hydroxide and of 1 M - 4 M potassium fluoride. The electrolyte 18 can have a pH within a range of about 12 to about 13.5.

In an example, the electrolyte 18 can be an aqueous solution of 4.0 M potassium fluoride and of 1 M - 4 M potassium acetate. The electrolyte 18 can have a pH within a range of about 9 to about 10.

In an example, the electrolyte 18 can be an aqueous solution of 4 M potassium fluoride. The electrolyte 18 can have a pH within a range of about 8.5 to about 9.

In an example, the electrolyte 18 can be an aqueous solution of 4.0 M - 8.0 M potassium hydroxide and of 0.01 M - 1 M potassium fluoride. The electrolyte 18 can have a pH within a range of about 12 to about 13.

In an example, the electrolyte 18 can be an aqueous solution of 4.0 M potassium hydroxide and of 1 M - 4 M potassium fluoride. The electrolyte 18 can have a pH within a range of about 12 to about 13.5.

In an example when the anode 18 includes bismuth, the electrolyte 18 can be an aqueous solution of 0.0025 M sulfuric acid and 0.01 - 1.0 M potassium fluoride. The electrolyte 18 can have a pH within the range of about 1.8 to about 2.2.

### Life Span of Anode

The sensor 10 of the present disclosure can have a life span of approximately 5 years. Antimony is a noble metal (thermodynamically stable in water) in the whole pH range of from -2 to +16. An alkaline or acid electrolyte can be used as the electrolyte 18 in the sensor 10. It can be seen that at thermodynamic equilibrium there is no self-corrosion due to H₂ evolution at the anode or self-corrosion due to H₂ evolution at the cathode.

In an example using pure antimony, the process of oxygen sensing (detection) may be characterized as follows:

### Cathode:

- Carbon platinized with 5% platinum is used for O₂ reduction reaction O₂+2H₂O+4e⁻=4OH⁻ equation [1]

### Anode:

- Pure antimony for *antimony oxidation reaction with 3 electron production per each Sb atom*

   2Sb+3H₂O=Sb₂O₃ +6H⁺+6e⁻ equation [2]

   **Cell reaction:**

   2 Sb+3O₂ =2 Sb₂O₃ equation [3]

### Electrolyte:

- An alkaline electrolyte like potassium acetate (CH₃COOK) (KOAc), KOH or organic bases (like ammonium quaternary hydroxide (R4N⁺OH⁻) with pH in the range from 7 to 14 can be used for the oxygen sensor 10. The oxidation reaction products are soluble in the electrolyte. As such, a fast response time of the sensor may be obtained.
- In the case of alkali electrolyte, according to the equilibrium reactions theory, a 3-electron Sb/Sb₂O₃ reaction (equation [3]) may take place, while the electrode potential of the anode will lay at 0.1 V vs NHE, which is a more cathodic potential with respect the Pb (0.25 V vs NHE), Cu (0.47 V vs NHE) or Bi (0.37 V vs NHE) potentials when immersed in the same electrolyte (*see* Fig 1 of the publication Atlas of Electrochemical Equilibria in Aqueous Solutions, 1974, page 527). All the above potential values are estimated with respect to the Normal Hydrogen Electrode (NHE), by using Pourbaix diagrams of those chemical elements.

A coulombic characterization of the antimony-alkaline electrolyte oxygen galvanic sensor 10 for the case of a sensor current of 100 microamperes and with an operation time of five years may be illustrated as follows. In this regard, the molar mass of antimony (Aw) = 121.76 g/mole; the Faraday constant (F) =96485 Coulomb/mole; and the number of electrons released by dissolution of one atom of antimony (n) = 3, according to the theoretical predictions.

In this case, the equivalent weight, Aw/n=40.58 and the capacity (A hr/g)=n *F/(Aw * 3600)=0.66 (which is higher than in the case of lead in the same electrolyte (0.258 Ampere*hour/gram)). The sensor current, I=100 microamperes (µA) in the case of continuous sensor operation for 5 years. Using this information, the minimum weight of an anode 16 may be calculated. In this regard, the antimony anode 16 weight =31.536 Aw I t/nF = 6.5 grams, where t is given in years, (5 years for this calculation) and I is given in microamperes (100 µA). In contrast, a lead anode weight may be calculated. For example, the lead anode weight = 31.536 Aw I t/nF = 16.9 grams, where t is given in years, (5 years for this calculation) and I is given in microamperes (100 µA). Thus, the antimony mass for 5-year operation in alkali (which is 6.5 grams) is less than the 16.9 grams for a lead anode or, in another calculation, 10.5 grams needed for a copper anode in the same electrolyte.

## Claims

1. An oxygen galvanic sensor comprising:
a housing (12) having a capillary (20) extending from an exterior surface to an interior surface;
an anode (16) that is substantially free from lead, the anode (16) formed of a plurality of sintered particles having a diameter of less than 2 millimeters and a long dimension equal to or less than 3 millimeters, wherein the anode (16) is selected from the group consisting of: antimony, bismuth, and copper and combinations thereof;
a cathode (14) including an electrocatalyst layer (26), wherein the electrocatalyst layer (26) includes at least one of platinum, silver and gold; and
an electrolyte (18) having an etching rate on the anode (16) that is greater than a oxide layer formation rate on the anode (16).

2. The oxygen galvanic sensor of claim 1, wherein the electrolyte (18) is an aqueous solution of 0.5 M- 4.0 M phosphoric acid and of 0.001 M - 2 M potassium fluoride.

3. The oxygen galvanic sensor of claim 1, wherein the electrolyte (18) is an aqueous solution of 4.0 M potassium hydroxide and of 1 M - 4 M potassium fluoride.

4. The oxygen galvanic sensor of claim 1, wherein the electrolyte (18) is an aqueous solution of 4.0 M potassium fluoride and of 1 M - 4 M potassium acetate.

5. The oxygen galvanic sensor of claim 1, wherein the electrolyte (18) is an aqueous solution of 4 M potassium fluoride

6. The oxygen galvanic sensor of claim 1, wherein the electrolyte (18) is an aqueous solution of 4.0 M - 8.0 M potassium hydroxide and of 0.01 M - 1 M potassium fluoride.

7. The oxygen galvanic sensor of claim 1 wherein the electrolyte (18) is an aqueous solution of 4.0 M potassium hydroxide and of 1 M - 4 M potassium fluoride.

8. The oxygen galvanic sensor of claim 1, wherein when the anode (16) includes bismuth, the electrolyte (18) is an aqueous solution of 0.0025 M sulfuric acid and 0.01 M - 1.0 M potassium fluoride.

9. The oxygen galvanic sensor of any one of claims 1 to 8, wherein a surface area of the anode (16) is within a range of from about 10 centimeters squared to about 60 centimeters squared.

10. The oxygen galvanic sensor of claim 1 or claim 2, wherein when the anode (16) is antimony, the anode (16) includes a plurality of antimony particles having a diameter of less than 1 millimeter, and when the anode (16) is bismuth, the anode (16) includes a plurality of bismuth particles having a diameter of less than 1 millimeter.

11. The oxygen galvanic sensor of any one of claims 1 to 10, wherein the electrocatalyst layer (26) includes platinum within a range of from 1 weight percent to less than 10 weight percent.

12. The oxygen galvanic sensor of any one of claims 1 to 10, wherein the electrocatalyst layer (26) includes at least one of silver and gold, wherein the at least one of silver and gold is within a range of from 1 weight percent to less than 10 weight percent, and gold within a range of from 1 weight percent to less than 10 weight percent

13. The oxygen galvanic sensor of any one of claims 1 to 12, wherein a length of the capillary (20) is within a range of from about 1.5 millimeters to about 3 millimeters, wherein a diameter of the capillary (20) is within a range of from about 10 micrometers to about 100 micrometers, and wherein a top diameter positioned proximate to the exterior surface of the housing (12) has a diameter that is greater than a bottom diameter positioned proximate to the interior surface of the housing (12).

14. The oxygen galvanic sensor of any one of claims 1 to 12, wherein a length of the capillary (20) is within a range of from about 1.5 millimeters to about 3 millimeters, wherein a diameter of the capillary (20) is within a range of from about 10 micrometers to about 100 micrometers, and wherein a top diameter positioned proximate to the exterior surface of the housing (12) has a diameter that is less than a bottom diameter positioned proximate to the interior surface of the housing (12).

## Patentansprüche

1. Galvanischer Sauerstoffsensor, umfassend:
ein Gehäuse (12) mit einer Kapillare (20), die sich von einer Außenseite zu einer Innenseite erstreckt;
eine Anode (16), die im Wesentlichen frei von Blei ist, wobei die Anode (16) aus einer Vielzahl gesinterter Partikel mit einem Durchmesser von weniger als 2 Millimetern und einer Längsabmessung gleich oder kleiner als 3 Millimetern gebildet ist, wobei die Anode (16) ausgewählt ist aus der Gruppe bestehend aus: Antimon, Bismut und Kupfer sowie Kombinationen davon;
eine Kathode (14), die eine Elektrokatalysatorschicht (26) einschließt, wobei die Elektrokatalysatorschicht (26) mindestens eines von Platin, Silber und Gold einschließt; und einen Elektrolyt (18) mit einer Ätzrate an der Anode (16), die größer als die Bildungsrate einer Oxidschicht an der Anode (16) ist.

2. Galvanischer Sauerstoffsensor nach Anspruch 1, wobei der Elektrolyt (18) eine wässrige Lösung von 0,5 M bis 4,0 M Phosphorsäure und 0,001 M bis 2 M Kaliumfluorid ist.

3. Galvanischer Sauerstoffsensor nach Anspruch 1, wobei der Elektrolyt (18) eine wässrige Lösung von 4,0 M Kaliumhydroxid und 1 M bis 4 M Kaliumfluorid ist.

4. Galvanischer Sauerstoffsensor nach Anspruch 1, wobei der Elektrolyt (18) eine wässrige Lösung von 4,0 M Kaliumfluorid und 1 M bis 4 M Kaliumacetat ist.

5. Galvanischer Sauerstoffsensor nach Anspruch 1, wobei der Elektrolyt (18) eine wässrige Lösung von 4 M Kaliumfluorid ist.

6. Galvanischer Sauerstoffsensor nach Anspruch 1, wobei der Elektrolyt (18) eine wässrige Lösung von 4,0 M bis 8,0 M Kaliumhydroxid und 0,01 M bis 1 M Kaliumfluorid ist.

7. Galvanischer Sauerstoffsensor nach Anspruch 1, wobei der Elektrolyt (18) eine wässrige Lösung von 4,0 M Kaliumhydroxid und 1 M bis 4 M Kaliumfluorid ist.

8. Galvanischer Sauerstoffsensor nach Anspruch 1, wobei der Elektrolyt (18), wenn die Anode (16) Bismut einschließt, eine wässrige Lösung von 0,0025 M Schwefelsäure und 0,01 M bis 1,0 M Kaliumfluorid ist.

9. Galvanischer Sauerstoffsensor nach einem der Ansprüche 1 bis 8, wobei eine Oberfläche der Anode (16) innerhalb eines Bereichs von etwa 10 Quadratzentimetern bis etwa 60 Quadratzentimetern liegt.

10. Galvanischer Sauerstoffsensor nach Anspruch 1 oder Anspruch 2, wobei die Anode (16), wenn die Anode (16) Antimon ist, eine Vielzahl von Antimonpartikeln mit einem Durchmesser von weniger als 1 Millimeter einschließt, und die Anode (16), wenn die Anode (16) Bismut ist, eine Vielzahl von Bismutpartikeln mit einem Durchmesser von weniger als 1 Millimeter einschließt.

11. Galvanischer Sauerstoffsensor nach einem der Ansprüche 1 bis 10, wobei die Elektrokatalysatorschicht (26) Platin in einem Bereich von 1 Gew.% bis weniger als 10 Gew.% einschließt.

12. Galvanischer Sauerstoffsensor nach einem der Ansprüche 1 bis 10, wobei die Elektrokatalysatorschicht (26) mindestens eines von Silber und Gold einschließt, wobei das mindestens eine von Silber und Gold innerhalb eines Bereichs von 1 Gew.% bis weniger als 10 Gew.% liegt, und Gold innerhalb eines Bereichs von 1 Gew.% bis weniger als 10 Gew.% liegt.

13. Galvanischer Sauerstoffsensor nach einem der Ansprüche 1 bis 12, wobei eine Länge der Kapillare (20) innerhalb eines Bereichs von etwa 1,5 Millimetern bis etwa 3 Millimetern liegt, wobei ein Durchmesser der Kapillare (20) innerhalb eines Bereichs von etwa 10 Mikrometern bis etwa 100 Mikrometern liegt, und wobei ein oberer Durchmesser, der in der Nähe der Außenfläche des Gehäuses (12) positioniert ist, einen Durchmesser aufweist, der größer als ein unterer Durchmesser ist, der in der Nähe der Innenfläche des Gehäuses (12) positioniert ist.

14. Galvanischer Sauerstoffsensor nach einem der Ansprüche 1 bis 12, wobei eine Länge der Kapillare (20) innerhalb eines Bereichs von etwa 1,5 Millimetern bis etwa 3 Millimetern liegt, wobei ein Durchmesser der Kapillare (20) innerhalb eines Bereichs von etwa 10 Mikrometern bis etwa 100 Mikrometern liegt, und wobei ein oberer Durchmesser, der in der Nähe der Außenfläche des Gehäuses (12) positioniert ist, einen Durchmesser aufweist, der kleiner als ein unterer Durchmesser ist, der in der Nähe der Innenfläche des Gehäuses (12) positioniert ist.

## Revendications

1. Capteur galvanique d'oxygène comprenant :
un boîtier (12) ayant un capillaire (20) s'étendant depuis une surface extérieure jusqu'à une surface intérieure ;
une anode (16) qui est sensiblement dépourvue de plomb, l'anode (16) étant constituée d'une pluralité de particules frittées ayant un diamètre de moins de 2 millimètres et une dimension longue égale ou inférieure à 3 millimètres, l'anode (16) étant choisie dans le groupe constitué par : l'antimoine, le bismuth et le cuivre, et les combinaisons de ceux-ci ;
une cathode (14) comportant une couche d'électrocatalyseur (26), la couche d'électrocatalyseur (26) comportant au moins un élément parmi le platine, l'argent et l'or ; et
un électrolyte (18) ayant une vitesse de décapage sur l'anode (16) qui est supérieure à une vitesse de formation de couche d'oxyde sur l'anode (16).

2. Capteur galvanique d'oxygène de la revendication 1, dans lequel l'électrolyte (18) est une solution aqueuse d'acide phosphorique 0,5 M-4,0 M et de fluorure de potassium 0,001 M-2 M.

3. Capteur galvanique d'oxygène de la revendication 1, dans lequel l'électrolyte (18) est une solution aqueuse d'hydroxyde de potassium 4,0 M et de fluorure de potassium 1 M-4 M.

4. Capteur galvanique d'oxygène de la revendication 1, dans lequel l'électrolyte (18) est une solution aqueuse de fluorure de potassium 4,0 M et d'acétate de potassium 1 M-4 M.

5. Capteur galvanique d'oxygène de la revendication 1, dans lequel l'électrolyte (18) est une solution aqueuse de fluorure de potassium 4 M.

6. Capteur galvanique d'oxygène de la revendication 1, dans lequel l'électrolyte (18) est une solution aqueuse d'hydroxyde de potassium 4,0 M-8,0 M et de fluorure de potassium 0,01 M-1 M.

7. Capteur galvanique d'oxygène de la revendication 1 dans lequel l'électrolyte (18) est une solution aqueuse d'hydroxyde de potassium 4,0 M et de fluorure de potassium 1 M-4 M.

8. Capteur galvanique d'oxygène de la revendication 1 dans lequel, quand l'anode (16) comporte du bismuth, l'électrolyte (18) est une solution aqueuse d'acide sulfurique 0,0025 M et de fluorure de potassium 0,01 M-1,0 M.

9. Capteur galvanique d'oxygène de l'une quelconque des revendications 1 à 8, dans lequel une surface de l'anode (16) se situe dans une gamme d'environ 10 centimètres carrés à environ 60 centimètres carrés.

10. Capteur galvanique d'oxygène de la revendication 1 ou la revendication 2 dans lequel, quand l'anode (16) est de l'antimoine, l'anode (16) comporte une pluralité de particules d'antimoine ayant un diamètre de moins de 1 millimètre, et quand l'anode (16) est du bismuth, l'anode (16) comporte une pluralité de particules de bismuth ayant un diamètre de moins de 1 millimètre.

11. Capteur galvanique d'oxygène de l'une quelconque des revendications 1 à 10, dans lequel la couche d'électrocatalyseur (26) comporte du platine dans une gamme de 1 pour cent en poids à moins de 10 pour cent en poids.

12. Capteur galvanique d'oxygène de l'une quelconque des revendications 1 à 10, dans lequel la couche d'électrocatalyseur (26) comporte de l'argent et/ou de l'or, l'argent et/ou l'or se situant dans une gamme de 1 pour cent en poids à moins de 10 pour cent en poids, et de l'or dans une gamme de 1 pour cent en poids à moins de 10 pour cent en poids.

13. Capteur galvanique d'oxygène de l'une quelconque des revendications 1 à 12, dans lequel une longueur du capillaire (20) se situe dans une gamme d'environ 1,5 millimètre à environ 3 millimètres, dans lequel un diamètre du capillaire (20) se situe dans une gamme d'environ 10 micromètres à environ 100 micromètres, et dans lequel un diamètre supérieur positionné à proximité de la surface extérieure du boîtier (12) a un diamètre qui est supérieur à un diamètre inférieur positionné à proximité de la surface intérieure du boîtier (12).

14. Capteur galvanique d'oxygène de l'une quelconque des revendications 1 à 12, dans lequel une longueur du capillaire (20) se situe dans une gamme d'environ 1,5 millimètre à environ 3 millimètres, dans lequel un diamètre du capillaire (20) se situe dans une gamme d'environ 10 micromètres à environ 100 micromètres, et dans lequel un diamètre supérieur positionné à proximité de la surface extérieure du boîtier (12) a un diamètre qui est inférieur à un diamètre inférieur positionné à proximité de la surface intérieure du boîtier (12).
